# EUROPÄISCHE PATENTANMELDUNG

(11) **EP 4 708 638 A1**
(43) Veröffentlichungstag der Anmeldung: **11.03.2026**
(21) Anmeldenummer: 25185865.0
(22) Anmeldetag: 27.06.2025
(51) Int. Cl.: H02K 1/32, H02K 9/19, H02K 7/04, H02K 7/116

(54) **GETRIEBE-ANTRIEBSEINHEIT UND EIN VERFAHREN ZUM BETREIBEN EINER SOLCHEN**

(30) Priorität: 04.07.2024 DE 102024206296
(71) Anmelder: Robert Bosch GmbH, 70442 Stuttgart (DE)
(72) Erfinder: Kohler, Stephan, 77815 Buehl (DE); Bolz, Peter, 77815 Buehl (DE)

(57) **Zusammenfassung**

Die Erfindung betrifft eine elektrische Getriebe-Antriebseinheit (10), sowie ein Verfahren zum Herstellen einer solchen, insbesondere für einen Traktionsantrieb eines Kraftfahrzeugs, mit einem Elektromotor (12), der einen Stator (60) mit einem Statorgrundkörper (61) aufweist, auf dem eine elektrische Wicklung (68) angeordnet ist, und mit einem eine Rotorwelle (14) aufweisenden Rotor (13), wobei durch die Rotorwelle (14) hindurch flüssiges Kühlmittel (30) in Radialrichtung (7) auf einen ersten Wickelkopf (71) der elektrischen Wicklung (68) geleitet werden kann, wobei mindestens ein in Axialrichtung (8) verlaufender Kühlmittelkanal (17) in einem Lamellenpaket (18) des Rotors (13) ausgebildet ist, durch den hindurch flüssiges Kühlmittel (30) auf einen zweiten Wickelkopf (72) der elektrischen Wicklung (68) geleitet werden kann.

## Beschreibung

### Stand der Technik

Die Erfindung betrifft eine elektrische Getriebe-Antriebseinheit und ein Verfahren zum Betreiben einer solchen nach der Gattung der unabhängigen Ansprüche.

Aus der EP 2 724 450 B1 ist eine elektrische Maschine bekannt geworden, die ein Statorgehäuse aufweist, in dem ein Stator mit einem bewickelten Lamellenpaket angeordnet ist. Zur Kühlung der elektrischen Wicklung weist die Rotorwelle einen durchgehenden zentralen Kühlkanal auf, durch den Öl als Kühlmittel geführt wird. In der Rotorwelle sind radiale Spritzöffnungen ausgebildet, durch die das Kühlmittel radial nach außen auf den Wickelkopf der elektrischen Wicklung gespritzt wird, und sich danach am Grund des Motorgehäuses sammelt. Von da wird das Öl mittels einer separaten Ölpumpe nach oben in die Rotorwelle befördert. Dabei erstreckt sich der zentralen Kühlkanal über die gesamte Länge der Rotorwelle, so dass an beiden Seiten des Lamellenpakets des Rotors jeweils die radialen Spritzöffnungen ausgeformt sind. Nachteilig hierbei ist, dass die Ausbildung des zentralen axialen Kühlkanals über die gesamte Länge der Rotorwelle sehr kostenintensiv und schwierig zu fertigen ist - außerdem wird dabei die mechanische Stabilität der vollständig hohlen Rotorwelle beeinträchtigt. Diese Nachteile sollen durch die Erfindung behoben werden.

### Offenbarung der Erfindung

Die erfindungsgemäße elektrische Getriebe-Antriebseinheit und das Verfahren zum Herstellen einer solchen mit den Merkmalen der unabhängigen Ansprüche haben demgegenüber den Vorteil, dass durch die Ausbildung des axialen Kühlmittelkanals direkt im Lamellenpaket des Rotors die Axialbohrungen in der Rotorwelle für das Kühlmittel deutlich kürzer ausgebildet werden kann. Dadurch können beide axialen Wickelköpfe zuverlässig mit Kühlmittel benetzt werden, wobei die Rotorwelle mit der deutlich kürzeren Axialbohrung signifikant billiger und prozesstechnisch günstiger herstellbar ist. Somit kann das Kühl-Schmiermittel des Untersetzungsgetriebes der Getriebe-Antriebseinheit ohne großen Zusatzaufwand auch für die zuverlässige Flüssigkeits-Kühlung der elektrischen Wicklung des Elektromotors genutzt werden. Damit kann beispielsweise auf eine zusätzliche Wasserkühlung mit einem Wassermantel um das Motorgehäuse herum verzichtet werden. Gleichzeitig kann durch die effiziente Flüssigkeits-Kühlung mit dem Getriebeöl eine sehr hohe Leistungsdichte der elektrischen Antriebseinheit zur Verfügung gestellt werden, wie dies beispielsweise für den Traktionsantrieb von Kraftfahrzeugen notwendig ist.

Durch die in den Unteransprüchen aufgeführten Maßnahmen ergeben sich vorteilhafte Weiterbildungen und Verbesserungen der in den unabhängigen Ansprüchen angegebenen Merkmale. Durch die Anordnung einer Verteiler-Kappe direkt an der ersten axialen Stirnseite des Lamellenpakets kann das flüssige Kühlmittel von der Axialbohrung der Rotorwelle durch eine entsprechende Radialbohrung in derselben in einem Hohlraum der Verteiler-Kappe angestaut werden. In der Verteiler-Kappe sind radiale Öffnungen ausgebildet, durch die das flüssige Kühlmittel durch die Fliehkraft bei der Rotation der Rotorwelle radial nach außen auf den ersten Wickelkopf gelenkt werden kann. Durch die Ausbildung der Verteiler-Kappe mit einem relativ großen radialen Durchmesser, sind die radialen Öffnungen der zylindrischen Umfangswand radial recht nah an der radialen Innenseite des ersten Wickelkopfes angeordnet, sodass durch die Anzahl und die Ausformung der radialen Öffnungen der erste Wickelkopf gezielt und zuverlässig mit Kühlmittel benetzt werden kann.

Besonders vorteilhaft ist die Verteiler-Kappe axial über den axialen Kühlmittelkanälen des Lamellenpakets angeordnet, sodass das das im Hohlraum der Verteiler-Kappe aufgestaute Kühlmittel direkt in die axialen Kühlmittelkanäle eingeleitet wird, und an der axial gegenüberliegenden Stirnseite des Lamellenpakets aus den Kühlmittelkanälen austritt. Aufgrund der Kühlmittelkanäle, die sich innerhalb des Lamellenpakets in Axialrichtung parallel zur Rotorwelle erstrecken, kann die Axialbohrung in der Rotorwelle deutlich verkürzt werden, was die Fertigungskosten der hohlen Rotorwelle wesentlich reduziert. Dadurch, dass die Verteiler-Kappe die axialen Öffnungen der Kühlmittelkanäle vollständig überdeckt, wird das flüssige Kühlmittel aus dem Hohlraum der Verteiler-Kappe entsprechend den Querschnitten der Kühlmittelkanäle und der radialen Öffnungen in der zylindrischen Umfangswand der Verteiler-Kappe zur Kühlung des ersten Wickelkopfs und des zweiten Wickelkopfs entsprechend verteilt.

Zum Auswuchten des Rotors ist auf der Rotorwelle zumindest an einer axialen Stirnseite des Lamellenpakets eine Ausgleichsscheibe angeordnet, an der zum Auswuchten des Rotors Material abgetragen (oder auch aufgetragen) werden kann. Damit diese Auswucht-Scheiben die axialen Öffnungen der Kühlmittelkanäle im Lamellenpaket nicht blockieren, sind in diesen entsprechende axiale Durchgangsöffnungen ausgebildet, die die Kühlmittelkanäle innerhalb des Lamellenpakets entsprechend axial verlängern. Dabei ist die Auswucht-Scheibe an der ersten Stirnseite des Lamellenpakets bevorzugt vollständig von der Verteiler-Kappe umschlossen, und somit innerhalb des Hohlraums der Verteiler-Kappe angeordnet.

Das flüssige Kühlmittel, das an der axial gegenüberliegenden zweiten Stirnseite am Lamellenpaket austritt, wird durch die Zentrifugalkraft von dort unmittelbar an die radiale Innenseite des zweiten Wickelkopfs geschleudert. Dabei sind hier keine zusätzlichen Flussleitmittel oder Düsen notwendig, da sich der zweite Wickelkopf unmittelbar von der zweiten axialen Stirnseite des Lamellenpakets, von diesem weg erstreckt. Gegebenenfalls kann an der zweiten axialen Stirnseite des Lamellenpakets ebenfalls eine zweite Auswucht-Scheibe mit entsprechenden axialen Durchgangsöffnungen für das Kühlmittel angeordnet sein, sodass das Kühlmittel direkt von der zweiten Auswucht-Scheibe zum zweiten Wickelkopf geführt wird.

Besonders kostengünstig können die axialen Kühlkanäle des Lamellenpakets hergestellt werden, indem beim normalen Stanzprozess der einzelnen Blechlamellen mit dem Ausstanzen der Aufnahmen für die Permanentmagnete im gleichen Prozess-Schritt die axial fluchtenden Ausstanzungen für die axialen Kühlmittelkanäle mit ausgeschnitten werden. Dabei kann auch das Design der einzelnen Blechlamellen derart ausgebildet sein, dass bestimmte Ausstanzungen für die Optimierung des magnetischen Flusses und des Gewichtes des Rotorpakets gleichzeitig für die Ausbildung der axialen Kühlmittelkanäle genutzt werden können. Diese werden bevorzugt symmetrisch über den Umfang verteilt angeordnet, beispielsweise zwei oder vier oder acht Kühlmittelkanäle, die sich über die gesamte axiale Länge des Lamellenpakets erstrecken.

Besonders vorteilhaft kann die Verteiler-Kappe als Kunststoffteil - insbesondere mittels Spritzgießen - hergestellt werden und unmittelbar auf die Rotorwelle aufgepresst werden. Hierzu weist die Verteiler-Kappe bevorzugt einen axialen Fortsatz auf, der als Hülse ausgebildet ist, die eine Presspassung mit der Rotorwelle ausbildet. Die Verteiler-Kappe weist dann eine parallel zur Stirnseite des Lamellenpakets verlaufende Ringscheibe auf, die den hülsenförmigen axialen Fortsatz mit einer zylindrischen Umfangswand der Verteiler-Kappe verbindet, die die axialen Öffnungen der Kühlmittelkanäle in Radialrichtung vollständig umschließt. Dabei dichtet die zylindrische Umfangswand der Verteiler-Kappe das Kühlmittel gegenüber der axialen Stirnseite des Lamellenpakets ab, damit das Kühlmittel aus der Verteiler-Kappe in die axialen Kühlmittelkanäle geführt werden kann. Radial außerhalb der zylindrischen Umfangswand sind vorteilhaft die Aufnahmen für die Permanentmagnete im Lamellenpaket ausgestanzt, so dass die Permanentmagnete bevorzugt radial zwischen der Verteiler-Kappe und dem Außenumfang des Lamellenpakets angeordnet sind.

Durch die äußerst kostengünstige Ausbildung der axialen Kühlmittelkanäle innerhalb des Lamellenpakets kann die Axialbohrung in der Rotorwelle entsprechend verkürzt werden. Dabei weist die Rotorwelle an ihrem freien axialen Ende zum Abtriebsritzel hin eine axiale Öffnung zum Einführen des flüssigen Kühlmittels auf. Von der axialen Öffnung an der Stirnseite der Rotorwelle erstreckt sich die Axialbohrung zumindest bis zum axialen Bereich der Verteiler-Kappe, um hier das Kühlmittel durch mindestens eine Radialbohrung von der Axialbohrung der Rotorwelle in den Hohlraum der Verteiler-Kappe zu führen. Da nun das Kühlmittel von der Verteiler-Kappe durch die axialen Kühlkanäle innerhalb des Lamellenpakets zum zweiten Wickelkopf geführt wird, kann auf eine Ausbildung der Axialbohrung in der Rotorwelle über den axialen Bereich des Lamellenpakets verzichtet werde, wodurch die Rotorwelle wesentlich robuster und kostengünstiger gefertigt werden kann.

Besonders einfach kann das Kühlmittel unmittelbar durch ein Getriebezahnrad nach oben befördert werden, das mit seiner Verzahnung ständig in den Kühlmittel-Sumpf eintaucht. Die Zähne des Getriebezahnrades transportieren in Verbindung mit der benachbarten Innenwand des Getriebegehäuses das Kühlmittel auf ein höheres Niveau, wo dieses gezielt der Axialbohrungen in der Rotorwelle zugeführt werden kann. Die Verzahnung ist dabei bevorzugt als radial äußere Stirnverzahnung ausgebildet, die praktisch als eine Art Schaufeln eines Schaufelrades wirken. Durch die Gestaltung der radialen und/oder axialen Spalte zwischen der Stirnverzahnung und der korrespondierenden Innenwand des Getriebegehäuses kann ein Strömungskanal ausgebildet werden, durch den das Kühlmittel im Hebe-Bereich entgegen der Schwerkraft nach oben befördert werden kann. Dabei wirken bevorzugt im Strömungskanal Adhäsions- und Kapillarkräfte, die das Kühlmittel nach oben ziehen. Durch die Wahl des Querschnitts dieses Strömungskanals kann in Abhängigkeit der Drehzahl des Elektromotors auch die Fördermenge an Kühl-Schmiermittel vorgegeben werden.

Besonders vorteilhaft ist die Flüssigkeits-Kühlung für eine elektrische Maschine geeignet, bei der die Rotorwelle in horizontaler Richtung angeordnet ist, beispielsweise bei einem Traktionsantrieb im Kraftfahrzeug. Aufgrund der Schwerkraft sammelt sich das Kühlmittel innerhalb des Getriebegehäuses im vertikal unteren Bereich im Kühlmittelsumpf, so dass besonders darauf geachtet werden muss, dass der vertikal obere Bereich oberhalb der Rotorwelle ebenfalls gut mit Kühlmittel versorgt wird. Durch die radialen Öffnungen in der Verteiler-Kappe und durch den Austritt aus den axialen Kühlkanälen des Lamellenpakets kann das Kühlmittel radial nach außen an die Innenseite der Wickelköpfe geführt werden. Mit einer solchen Flüssigkeitskühlung können elektrischer Maschinen mit hoher Leistung auch für den Einsatz eines Dauerbetriebs ausreichend gekühlt werden. Als Kühlmittel kann beispielsweise Kühl-Öl verwendet werden, das sich nach dem Benetzen des Wickelkopfes im Getriebegehäuse sammelt, und aus diesem wieder nach oben zur Axialbohrung der Rotorwelle angehoben kann, um einen Kühlkreislauf für die elektrische Wicklung und für das Zahnradgetriebe zu realisieren.

Als Kühl-Schmiermittel wird besonders vorteilhaft ein Medium verwendet, das sowohl die Getriebebauteile schmiert als auch den Elektromotor kühlt. Dazu eignet sich insbesondere ein Getriebe-Öl, dessen Eigenschaften auf die Kühlung optimiert sind. Für die Kühlung ist insbesondere günstig, dass das Kühl-Schmiermittel dünnflüssiger ist als normales Getriebe-Öl.

Bevorzugt weist die Getriebe-Antriebseinheit auch ein Elektronikgehäuse auf, in der eine Elektronik für die Ansteuerung des Elektromotors angeordnet ist. Um insbesondere Wärme aufzunehmen, die von einem Inverter im Elektronikgehäuse erzeugt wird, kann zwischen dem Getriebegehäuse und dem Elektronikgehäuse ein Kühlmittelführung eines weiteren Kühlkreises angeordnet werden, der beispielsweise mit Kühlwasser als zweite Kühlflüssigkeit betrieben wird. Die zweite Kühlflüssigkeit nimmt dabei zuerst die Wärme aus dem Elektronikgehäuse auf, und wird dann zum Kühl-Schmiermittel-Sumpf im Getriebegehäuse geführt, um auch von diesem Wärme aufzunehmen. Dadurch kann die zweite Kühlflüssigkeit, die für die Entwärmung des Elektronikgehäuse notwendig ist, zusätzlich auch für die Abkühlung des Kühl-Schmiermittels im Getriebegehäuse genutzt werden.

Im Betreib der erfindungsgemäßen Flüssigkeits-Kühlung wird durch das Rotieren der Rotorwelle des Elektromotors das Kühl-Schmiermittel mittels einem Getriebeelement des nachfolgenden Getriebes aus dem Kühl-Schmiermittelsumpf in das erhöht angeordnete Kühl-Schmiermittel-Reservoir angehoben, oder unmittelbar zur Axialbohrung der Rotorwelle befördert. Durch die Verteiler-Kappe wird das Kühl-Schmiermittel direkt zum ersten Wickelkopf und über die axialen Kühlmittelkanäle innerhalb des Lamellenpakets zum zweiten Wickelkopf geführt. Dort nimmt das Kühlmittel Wärme aus der elektrischen Wicklung auf und fließt wieder nach unten in den Kühl-Schmiermittel-Sumpf. Dabei können sowohl die elektrische Wicklung des Elektromotors als auch die Getrieberäder wirksam gekühlt und letztere gegebenenfalls geschmiert werden. Der Kühlmittel-Sumpf kann dabei durch einen Kühlkreis einer zweiten Kühlflüssigkeit entwärmt werden, wobei insbesondere die zweite Kühlflüssigkeit zuvor das Elektronikgehäuse entwärmt, das unmittelbar am Getriebegehäuse angeordnet ist.

### Beschreibung der Zeichnungen

Weitere Merkmale der Erfindung ergeben sich aus den weiteren Ausführungen der Beschreibung und der Zeichnungen, wie diese in den nachfolgenden Ausführungsbeispielen der Erfindung beschrieben sind. Es zeigen:
- Fig. 1: eine erste Ausführung einer erfindungsgemäßen elektrischen Getriebe-Antriebseinheit,
- Fig. 2: eine Detaildarstellung des Ausführungsbeispiels gemäß Fig. 1 im Schnitt,
- Fig. 3: eine weitere Schnittdarstellung eines weiteren Ausführungsbeispiels,
- Fig. 4: eine Rückansicht des Ausführungsbeispiels gemäß Fig. 1,
- Fig. 5: eine schematische Ansicht eines weiteren Ausführungsbeispiels, und
- Fig. 6: eine weitere Ausführung einer Kühl-Schmiermittel-Förderungsvorrichtung.

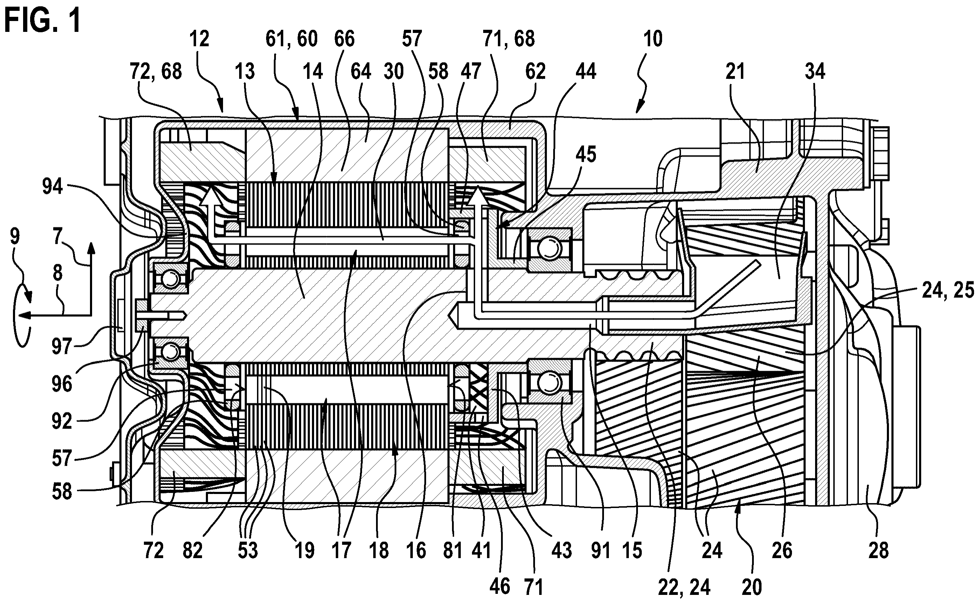

In Fig. 1 ist ein Längsschnitt durch eine Getriebe-Antriebseinheit 10 dargestellt, wie sie beispielsweise in einer die e-Achse für einen elektrischen Traktionsantrieb eines Kraftfahrzeugs verwendet wird. Dabei weist ein Elektromotor 12 einen Rotor 13 mit einer in Axialrichtung 8 verlaufenden Rotorwelle 14 auf, die ein Antriebsmoment über ein Abtriebsritzel 22 auf ein Zahnradgetriebe 20 überträgt, das in einem Getriebegehäuse 21 angeordnet ist. Das Abtriebsritzel ist hier beispielsweise einstückig direkt auf der Rotorwelle 14 ausgeformt. Das Zahnradgetriebe 20 ist hier beispielsweise als zweistufiges Stirnrad-Getriebe ausgebildet, das insbesondere eine e-Achse antreibt. Der Elektromotor 12 weist des Weiteren einen Stator 60 auf, auf dem eine elektrische Wicklung 68 für den Antrieb des Rotors 13 angeordnet ist. Dabei ragt die elektrische Wicklung 68 mit einem ersten Wickelkopf 71 und einem zweiten axial gegenüberliegenden zweiten Wickelkopf 72 axial über einen Statorgrundkörper 61 hinaus, der insbesondere aus einzelnen Lamellenblechen aufgebaut ist. Der Statorgrundkörper 61 weist einen radial äußeren Jochring 64 auf, von dem sich Statorzähne 66 in Radialrichtung 7 nach innen erstrecken. Die elektrische Wicklung 68 ist bevorzugt als sogenannte Steckwicklung ausgebildet, bei der starre Wicklungsdrähte axial zwischen den Startorzähnen 66 eingefügt sind, die im Bereich mindestens einer der Wickelköpfe 71, 72 miteinander verschweißt sind. Um die elektrische Wicklung 68 im Betrieb des Elektromotors 12 zu kühlen, wird ein flüssiges Kühlmittel 30 von der Rotorwelle 14 aus in Radialrichtung 7 nach außen auf radiale Innenseiten 70 der beiden Wickelköpfe 71,72 geführt. Hierzu ist in der Rotorwelle 14 eine Axialbohrung 15 ausgebildet, die sich von einem freien Ende am Abtriebsritzel 22 in Axialrichtung 8 zumindest bis zum ersten Wickelkopf 71 erstreckt, der axial zwischen einem ersten Wälzlager 91 der Rotorwelle 14 und dem Statorgrundkörper 61 angeordnet ist. Somit ist die Axialbohrung 15 als Sacklochbohrung 55 ausgebildet, die sich insbesondere nicht über die gesamte Länge des Rotors 13 erstreckt. Im axialen Bereich des ersten Wickelkopfes 71 ist auf der Rotorwelle 14 eine Verteiler-Kappe 44 angeordnet, die einen ringförmigen Hohlraum 41 an einer ersten Stirnseite 81 eines Lamellenpakets 18 des Rotors 13 ausbildet. Die Verteiler-Kappe 44 ist beispielsweise aus Kunststoff ausgebildet und weist einen hülsenförmigen axialen Fortsatz 45 auf, der beispielsweise auf die Rotorwelle 13 aufgepresst ist. Die Verteiler-Kappe 44 weist eine zylindrische Umfangswand 47 auf, in der mindestens eine radiale Öffnungen 46 ausgebildet ist, durch die das Kühlmittel 30 aufgrund der Fliehkraft radial nach außen auf die radiale Innenseite 70 des ersten Wickelkopfes 71 geschleudert wird. Hierzu ist in der Rotorwelle 14 im axialen Bereich der Verteiler-Kappe 44 mindestens eine radiale Bohrung 16 ausgeformt, durch die das Kühlmittel 30 aus der Axialbohrung 15 in den ringförmigen Hohlraum 41 der Verteiler-Kappe 44, und von da durch deren mindestens eine radiale Öffnung 46 zur elektrischen Wicklung 68 des ersten Wickelkopfes 71 strömt. Im Lamellenpaket 18 des Rotors 13 ist des Weiteren in Axialrichtung 8 mindestens ein Kühlmittelkanal 17 ausgebildet, in den hinein das Kühlmittel 30 aus dem ringförmigen Hohlraum 41 der Verteiler-Kappe 44 hinein fließt. Dabei weist die zylindrische Umfangswand 47 der Verteiler-Kappe 44 einen so großen Durchmesser, dass die Verteiler-Kappe 44 alle axialen Kühlmittelkanäle 17 in Radialrichtung 7 vollständig überdeckt. Im rotierenden Betrieb des Rotors 13 entsteht dabei im Hohlraum 41 der Verteiler-Kappe 44 ein gewisser Staudruck des Kühlmittels 30, der dazu führt, dass das Kühlmittel 30 in Axialrichtung 8 durch den mindestens einen axialen Kühlmittelkanal 17 durch das Lamellenpaket 18 hindurch zum zweiten Wickelkopf 72 geführt wird, der axial gegenüberliegend zum ersten Wickelkopf 71 am Startorgrundkörper 61 ausgebildet ist. Dabei tritt das Kühlmittel 30 an einer zweiten Stirnseite 82 aus dem Lamellenpaket 18 aus, und wird durch die Fliehkraft in Radialrichtung 7 nach außen auf die Innenseite 70 des zweiten Wickelkopfes 72 geführt. Die Rotorwelle 13 ist im axialen Bereich des zweiten Wickelkopfes 72 mittels einem zweiten Wälzlager 92 in einem Lagerschild 94 gelagert, das insbesondere Bestandteil des Motorgehäuses 62 ist, in das der Statorgrundkörper 61 eingefügt ist. Der mindestens eine axiale Kühlmittelkanal 17 wird durch axial fluchtende Ausstanzungen 19 beim Ausstanzen der einzelnen Blechlamellen 53 des Lamellenpakets 18 ausgebildet. Beispielsweise können dabei zwei oder vier oder acht axiale Kühlmittelkanäle 17 gleichzeitig ausgestanzt werden. Dabei ist insbesondere auch nicht erforderlich, dass die axialen Kühlmittelkanäle 17 dicht ausgebildet sind, da auch Kühlmittel 30 in Radialrichtung 7 zwischen den einzelnen Blechlamellen 53 eindringen darf. An der ersten Stirnseite 81 und/oder an der zweiten Stirnseite 82 des Lamellenpakets 18 ist optional eine Unwucht-Ausgleichsscheibe 58 auf der Rotorwelle 14 angeordnet, mittels derer der gesamte Rotor 13 bei dessen Montage ausgewuchtet wird. Damit das Kühlmittel 30 von der Verteiler-Kappe 44 zum zweiten Wickelkopf 72 gelangen kann, sind in der mindestens einen Unwucht-Ausgleichsscheibe 58 axiale Durchgangsöffnungen 57 ausgespart, die eine axiale Verlängerung der axialen Kühlmittelkanäle 17 des Lamellenpakets 18 bilden. Das Kühlmittel 30 wird am freien Ende im Bereich des Abtriebsritzels 22 in die Axialbohrung 15 ein geführt. In Fig. 1 ist hierzu ein Kühlmittelreservoir 34 in Vertikalrichtung 6 oberhalb der in horizontaler Richtung verlaufenden Rotorwelle 14 angeordnet. Dadurch kann durch die Schwerkraft ständig Kühlmittelmittel 30 in die Axialbohrung 15 nachgeführt werden. Aufgrund der Fliehkraft, durch die das Kühlmittel 30 aus der Verteiler-Kappe 44 radial nach außen geschleudert wird, entsteht in der Axialbohrung 15 auch ein gewisser Unterdruck, der dazu führt, dass Kühlmittel 30 angesaugt werden kann. Daher kann gegebenenfalls auf das höher gelegene Kühlmittelreservoir 34 verzichtet werden, und das Kühlmittel 30 insbesondere direkt aus einem Kühlmittelsumpf 32 angesaugt werden, der in Vertikalrichtung 6 tiefer liegt, als die Rotorwelle 14. In Fig. 1 ist an dem dem Abtriebsritzel 22 gegenüberliegenden Ende der Rotorwelle 14 ein Signalgeber 96, drehfest befestigt, der mit einem gegenüberliegenden Drehlagensensor 97 zusammenwirkt, um dadurch den Drehwinkel des Rotors 13 detektieren zu können. Der Drehlagensensor 97 ist hierbei Bestandteil einer Elektronik 51, die vorzugsweise in einem Elektronikgehäuse 50 aufgenommen ist, das bevorzugt unmittelbar benachbart zum Motorgehäuse 62 angeordnet ist.

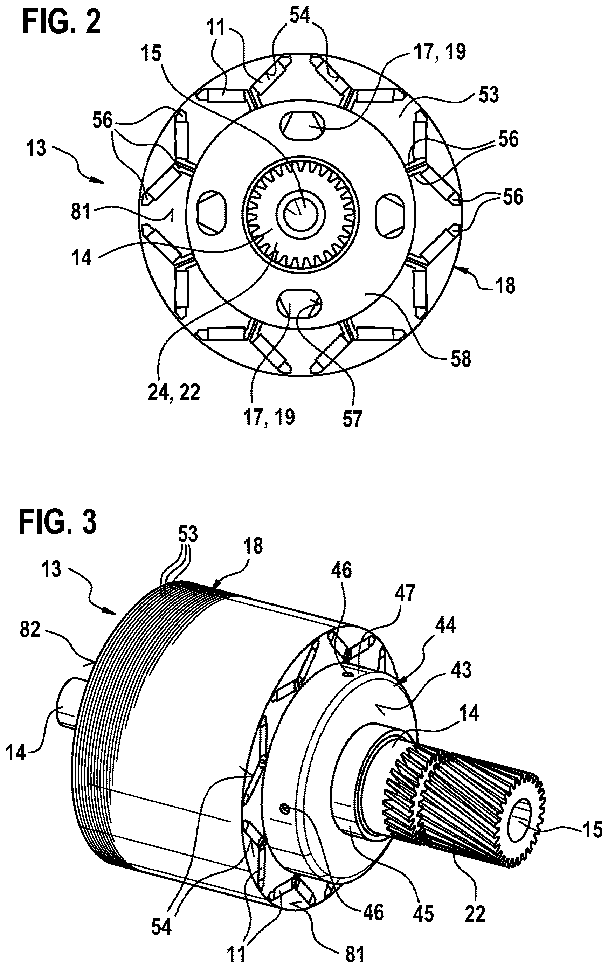

Fig. 2 zeigt eine Ansicht auf die erste Stirnseite 81 des Lamellenpakets 18, bevor die Verteiler-Kappe 44 auf die Rotorwelle 14 aufgesetzt ist. Im Lamellenpaket 18 sind hier beispielsweise vier axiale Kühlmittelkanäle 17 gleichmäßig über den Umfang des Rotors 13 verteilt angeordnet. Dabei werden die axial fluchtende Aussparungen 19 in den einzelnen Blechlamellen 53 zusammen mit Aufnahmen 54 für Permanentmagnete 11 ausgestanzt, die hier im radial äußeren Bereich außerhalb der Verteiler-Kappe 44 angeordnet sind. Die Permanentmagnete 11 sind hier beispielsweise V-förmig als "vergrabene Magnete" angeordnet, wobei des Weiteren Freisparungen 56 als Flussleitmittel in den Blechlamellen 53 ausgestanzt sind. Die Blechlamellen 53 sind beispielsweise auf die Rotorwelle 14 aufgepresst. Die axialen Kühlmittelkanäle 17 sind im radial inneren Bereich des Lamellenpakets 18 zur Rotorwelle 14 hin angeordnet. Auf der ersten Stirnseite 81 ist eine Unwucht-Ausgleichsscheibe 58 angeordnet, die sich in Radialrichtung 7 über die axialen Kühlmittelkanäle 17 hinaus erstreckt. In der Unwucht-Ausgleichsscheibe 58 sind axiale Durchgangsöffnungen 57 ausgebildet, durch die hindurch die axialen Kühlmittelkanäle 17 im Lamellenpaket 18 axial für das Kühlmittel 30 frei zugänglich sind. Dabei kann die Geometrie der axialen Durchgangsöffnungen 57 der Unwucht-Ausgleichsscheibe 58 auch von der Geometrie der axial fluchtenden Ausstanzungen 19 der Blechlamellen 53 abweichen. So kann das Kühlmittel 30 zuerst axial durch die axiale Durchgangsöffnungen 57 und anschließend unmittelbar axial durch die axialen Kühlmittelkanäle 17 fließen. Am ersten Ende der Rotorwelle 14 ist das Abtriebsritzel 22 angeordnet, das bei dieser Ausführung als separates Bauteil auf der Rotorwelle 14 befestigt ist. Innerhalb der Rotorwelle 14 ist die Axialbohrung 15 als Sack-Bohrungen 55 ausgebildet, die sich vom ersten freien Ende der Rotorwelle 14 näherungsweise bis zur ersten Stirnseite 81 des Lamellenpakets 18 erstreckt.

In Fig. 3 ist der Rotor 13 aus Fig. 2 dargestellt, bei dem nun die Verteiler-Kappe 44 auf die Rotorwelle 14 aufgesetzt ist. Dabei kann der hülsenförmige axiale Fortsatz 45 der Verteiler-Kappe 44 axial auf die Rotorwelle 14 aufgeschoben werden, bis die zylindrische Umfangswand 47 axial an der ersten Stirnseite 81 des Lamellenpakets 18 anliegt. Die zylindrische Umfangswand 47 ist über eine Ringfläche 43 mit dem hülsenförmigen Fortsatz 45 verbunden, so dass zwischen der Ringfläche 43 und der ersten Stirnseite 81 des Lamellenpakets 18 ein Hohlraum 41 gebildet wird, in den das Kühlmittel 30 aus der Axialbohrung 15 über die Radialbohrung 16 der Rotorwelle 14 hinein fließt. Innerhalb dieses Hohlraumes 41 ist hier insbesondere die Unwucht-Ausgleichsscheibe 58 konzentrisch zur Rotorwelle 14 angeordnet. Aus dem Hohlraum 41 der Verteiler-Kappe 44 strömt das Kühlmittel 30 durch die radialen Öffnungen 46 in der zylindrischen Umfangswand 47 der Verteiler-Kappe 44 radial nach außen, um dort die elektrische Wicklung 68 zu benetzen. Gleichzeitig fließt ein Teil der Kühlflüssigkeit 30 in die nicht dargestellten axialen Kühlmittelkanäle 17 bis zur zweiten Stirnseite 82 des Lamellenpakets 18, um dort den zweiten Wickelkopf 72 zu kühlen.

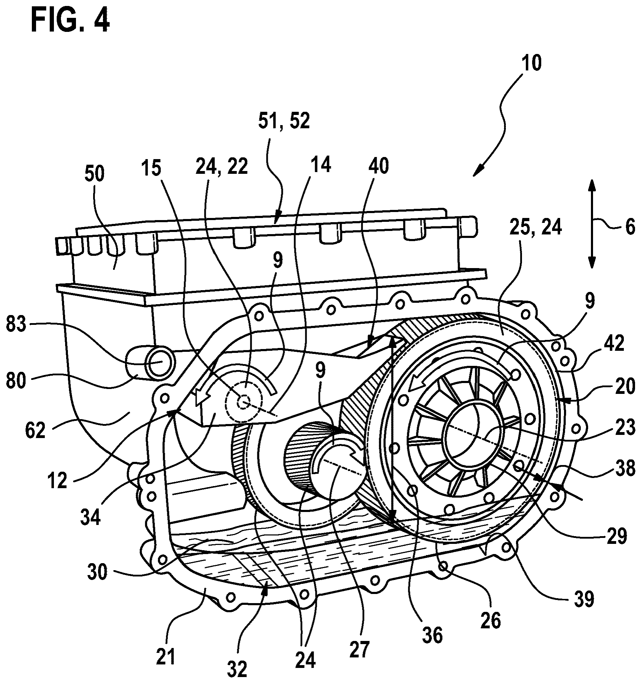

Fig. 4 zeigt eine weitere Ausführung einer erfindungsgemäßen Getriebe-Antriebseinheit 10, bei der das Getriebegehäuse 21 des Zahnradgetriebes 20 an das Motorgehäuse 62 angefügt ist. Dabei ragt die Rotorwelle 14 mit dem darauf angeordneten Abtriebsritzel 22 in das Getriebegehäuse 21 hinein, um dort ein auf einer Zwischenwelle 27 gelagertes Getrieberad 24 anzutreiben. Auf der Zwischenwelle 27 ist ein weiteres Getrieberad 24 einer zweiten Getriebestufe angeordnet, das mit einem weiteren Getrieberad 24 kämmt, das auf einer Abtriebsachse 23 gelagert ist. Auf der Abtriebsachse 23 ist ein Abtriebselement 29 angeordnet, mit dem dann das zur Verfügung stehende Drehmoment beispielsweise auf eine Achse eines Kraftfahrzeugs übertragen werden kann. Dabei ist die Drehrichtung der Getrieberäder 24 des Zahnradgetriebes 20 durch die Doppelpfeile 9 dargestellt. Für die Schmierung und Kühlung des Zahnradgetriebes 20 ist im Getriebegehäuse 21 als Kühlmittel 30 ein Getriebe-Öl eingefüllt, das sich aufgrund der Schwerkraft im unteren Bereich des Getriebegehäuses 21 in einem Kühlmittel-Sumpf 32 sammelt. Dabei wird durch mindestens eines der Getriebezahnräder 24 Kühlmittel 30 vom Kühlmittel-Sumpf 32 über einen Hebebereich 36 entgegen der Schwerkraft in ein Kühlmittel-Reservoir 34 befördert. Dazu ist mindestens ein Förder-Getrieberad 25 derart angeordnet, dass dessen radial äußere Stirnverzahnung 26 nur einen geringen radialen Spalt 38 zu einer in Radialrichtung 7 benachbarten Innenwand 39 des Getriebegehäuses 21 aufweist. Dadurch wirkt die Stirnverzahnung 26 des Förder-Getrieberads 25 als eine Art Schaufelrad, das das Kühlmittel 30 entlang der Innenwand 39 des Getriebegehäuses 21 entgegen der Schwerkraft in Vertikalrichtung 6 nach oben in das Kühlmittel-Reservoir 34 anhebt. Dazu ist im oberen Bereich des Förder-Getrieberads 25 tangential zur Stirnradverzahnung 26 eine Aufnahme-Rampe 40 angeordnet, die das Kühlmittel 30 von der Stirnverzahnung 26 aufnimmt und in das Kühlmittel-Reservoir 34 leitet. Bei dieser Ausführung ist der radiale Spalt 38 zur Innenwand 39 über einen gewissen Umfangswinkel des Förder-Getrieberads 25 so gering ausgebildet, dass das Kühlmittel 30 durch Adhäsionskräfte und Kapillarkräfte mit der Drehung des Förder-Getrieberads 25 mit nach oben gezogen wird. Von dem Kühlmittel-Reservoir 34 kann das Kühlmittel 30 zur Axialbohrung 15 in der Rotorwelle 14 geleitet werden. Von dieser Axialbohrung 15 kann das Kühlmittel 30 durch die Radialbohrungen 16 in der Rotorwelle14 über die Verteiler-Kappe 44 auf die elektrische Wicklung 68 des Elektromotors 12 geleitet werden, wie dies in Fig. 1 näher dargestellt ist. In Fig. 4 weist das Getriebegehäuse 21 einen axialen offenen Flansch auf, der mit einem hier nicht dargestellten Getriebegehäusedeckel 28 gemäß Fig. 1 verschließbar ist. Oberhalb des Getriebegehäuses 21 und des Motorgehäuses 62 ist hier das Elektronikgehäuse 50 angeordnet, das beispielsweise als Elektronik 51 einen Inverter 52 für die Ansteuerung des Elektromotors 12 aufnimmt. Zwischen dem Elektronikgehäuse 50 einerseits und dem Getriebegehäuse 21 und dem Motorgehäuse 62 andererseits ist ein Kühlkreis 80 ausgebildet, der von einer zweiten Kühlflüssigkeit - beispielsweise Kühlwasser - durchflossen wird. Dabei fließt die zweite Kühlflüssigkeit zuerst an der Unterseite des Elektronikgehäuses 50 entlang, und wird danach in dem Kühlkreis 80 nach unten zu dem Kühlmittelsumpf 34 geführt. Dabei ist insbesondere ein Einlass 83 des Kühlkreises 80 im oberen Bereich des Getriebegehäuses 21 angeordnet, wohingegen ein Auslass des Kühlkreises 80 im unteren Bereich des Getriebegehäuses 21 angeordnet ist.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Kontur und Anordnung der Verteiler-Kappe 44 und deren radiale Öffnungen 46 entsprechend angepasst werden. Die Ausformung und der Verlauf der Kühlmittelkanäle 17 und der axialen Durchgangsöffnungen 57 der Unwucht-Ausgleichsscheiben 58 und auch die Zuführung des Kühlmittels 30 in die Axialbohrung 15 der Rotorwelle 14 kann an die Anforderungen der elektrischen Maschine 12 und deren Fertigungsmöglichkeiten angepasst werden. Die elektrische Maschine 12 ist dabei bevorzugt als elektronisch kommutierter Motor ausgebildet, wobei die elektrische Wicklung 68 als Steckwicklung oder auch als gewickelte Spulenwicklung ausgebildet sein kann. Die Erfindung eignet sich in besonderer Weise für den Drehantrieb von Komponenten oder als Traktionsantrieb im Kraftfahrzeug, ist jedoch nicht auf diese Anwendung beschränkt.

## Patentansprüche

1. Getriebe-Antriebseinheit (10), insbesondere für einen Traktionsantrieb eines Kraftfahrzeugs, mit einem Elektromotor (12), der einen Stator (60) mit einem Statorgrundkörper (61) aufweist, auf dem eine elektrische Wicklung (68) angeordnet ist, und mit einem eine Rotorwelle (14) aufweisenden Rotor (13), wobei durch die Rotorwelle (14) hindurch flüssiges Kühlmittel (30) in Radialrichtung (7) auf einen ersten Wickelkopf (71) der elektrischen Wicklung (68) geleitet werden kann, wobei mindestens ein in Axialrichtung (8) verlaufender Kühlmittelkanal (17) in einem Lamellenpaket (18) des Rotors (13) ausgebildet ist, durch den hindurch flüssiges Kühlmittel (30) auf einen zweiten Wickelkopf (72) der elektrischen Wicklung (68) geleitet werden kann.

2. Getriebe-Antriebseinheit (10) nach Anspruch 1, **dadurch gekennzeichnet, dass** im axialen Bereich des ersten Wickelkopfes (71) eine Verteiler-Kappe (44) auf der Rotorwelle (14) angeordnet ist, in der radiale Öffnungen (46) ausgebildet sind, durch die das Kühlmittel (30) zum ersten Wickelkopf (71) geführt werden kann, wobei das Kühlmittel (30) von einer Axialbohrung (15) in der Rotorwelle (14) durch mindestens eine Radialbohrung (16) in der Rotorwelle (14) in die Verteiler-Kappe (44) gelangen kann.

3. Getriebe-Antriebseinheit (10) nach einem der vorherigen Ansprüche, **dadurch gekennzeichnet, dass** die Verteiler-Kappe (44) den mindestens einen axialen Kühlmittelkanal (17) des Lamellenpakets (18) axial abdeckt, und das Kühlmittel (30) von der Verteiler-Kappe (44) einerseits direkt durch die radialen Öffnungen (46) zum ersten Wickelkopf (71) und andererseits durch den mindestens einen axialen Kühlmittelkanal (17) zum zweiten Wickelkopf (72) geführt werden kann.

4. Getriebe-Antriebseinheit (10) nach einem der vorherigen Ansprüche, **dadurch gekennzeichnet, dass** axial auf dem Lamellenpaket (18) mindestens eine Unwucht-Ausgleichsscheibe (58) angeordnet ist, die mindestens eine axiale Durchgangsöffnung (57) in Verlängerung des mindestens einen axialen Kühlmittelkanals (17) des Lamellenpakets (18) aufweist.

5. Getriebe-Antriebseinheit (10) nach einem der vorherigen Ansprüche, **dadurch gekennzeichnet, dass** das Kühlmittel (30) im Bereich des zweiten Wickelkopfes (72) axial aus dem axialen Kühlmittelkanal (17) austritt und durch die Zentrifugalkraft radial nach außen auf den zweiten Wickelkopf (72) geführt werden kann.

6. Getriebe-Antriebseinheit (10) nach einem der vorherigen Ansprüche, **dadurch gekennzeichnet, dass** der mindestens eine axiale Kühlmittelkanal (17) durch axial fluchtende Ausstanzungen (19) in einzelnen Blechlamellen (53) des Lamellenpakets (18) ausgebildet ist - wobei insbesondere über den Umfang verteilt zwei oder vier oder acht axiale Kühlmittelkanäle (17) ausgebildet sind.

7. Getriebe-Antriebseinheit (10) nach einem der vorherigen Ansprüche, **dadurch gekennzeichnet, dass** die Verteiler-Kappe (44) aus Kunststoff ausgebildet ist, und die Unwucht-Ausgleichsscheibe (58) radial vollständig überdeckt, und die Verteiler-Kappe (44) einen hülsenartigen axialen Fortsatz (45) aufweist, der auf die Rotorwelle (14) aufgepresst ist - und insbesondere radial außerhalb der Verteiler-Kappe (44) - vorzugsweise vergrabene - Permanentmagnete (11) im Lamellenpaket (18) angeordnet sind.

8. Getriebe-Antriebseinheit (10) nach einem der vorhergehenden Ansprüche, **dadurch gekennzeichnet, dass** die Axialbohrung (15) ausgehend von einem freien Ende der Rotorwelle (14) an einem Zahnradgetriebe (20) in Axialrichtung (8) als Sackbohrung (55) nur bis zur Verteiler-Kappe (44) reicht - und insbesondere im axialen Bereich des Lamellenpakets (18) in der Rotorwelle (14) keine Axialbohrung (15) ausgebildet ist.

9. Getriebe-Antriebseinheit (10) nach einem der vorhergehenden Ansprüche, **dadurch gekennzeichnet, dass** auf der Rotorwelle (14) ein Abtriebsritzel (22) angeordnet ist, das das nachfolgende Zahnradgetriebe (20) antreibt, wobei das Zahnradgetriebe (20) in einem Getriebegehäuse (21) angeordnet ist und mehrere Getrieberäder (24) aufweist, wobei mittels mindestens einem Getrieberad (24) flüssiges Kühlmittel (30) im Getriebegehäuse (21) aus einem Kühlmittelsumpf (32) zur höher gelegenen Rotorwelle (14) beförderbar ist - wobei insbesondere das mindestens eine Getrieberad (24) eine gerade oder schräge Stirnverzahnung (26) aufweist, die in den Kühlmittelsumpf (32) eintaucht und als Schaufelrad für das Kühlmittel (30) wirkt.

10. Getriebe-Antriebseinheit (10) nach einem der vorherigen Ansprüche, **dadurch gekennzeichnet, dass** die Rotorwelle (14) horizontal im Kraftfahrzeug angeordnet ist, und mittels der mindestens einen Radialbohrung (16) in der Rotorwelle (14) auch der Teil der elektrischen Wickelköpfe (71, 72), die in Vertikalrichtung (6) über der Rotorwelle (14) angeordnet ist, durch die Zentrifugalkraft ausreichend mit Kühlmittel (30) benetzbar ist.

11. Getriebe-Antriebseinheit (10) nach einem der vorherigen Ansprüche, **dadurch gekennzeichnet, dass** das flüssige Kühlmittel (30) gleichzeitig als Schmiermittel für die Getrieberäder (24) des Zahnradgetriebes (20) und als Kühlmittel für den Elektromotor (12) ausgebildet ist - und vorzugsweise das Kühlmittel (30) ein für die Kühlung optimiertes Getriebe-Öl ist.

12. Getriebe-Antriebseinheit (10) nach einem der vorherigen Ansprüche, **dadurch gekennzeichnet, dass** an dem Getriebegehäuse (21) ein Elektronikgehäuse (50) - insbesondere beinhaltend einen Inverter (52) - angeordnet ist, wobei zwischen dem Getriebegehäuse (21) und dem Elektronikgehäuse (50) ein Kühlkreis (80) ausgebildet ist, wobei der Kühlkreis (80) von einer zweiten Kühlflüssigkeit - vorzugsweise Kühlwasser - durchströmbar ist, die an einem ersten Bereich Wärme aus dem Elektronikgehäuse (50) und an einem zweiten Bereich Wärme aus dem Kühlmittelsumpf (32) des Getriebegehäuses (21) aufnehmen kann.

13. Verfahren zum Betreiben einer elektrischen Getriebe-Antriebseinheit (10) insbesondere nach einem der vorherigen Ansprüche, mit folgenden Schritten:
- Mit dem Rotieren einer Rotorwelle (14) eines Elektromotors (12) wird Kühlmittel (30) mittels einem Getrieberad (24) eines dem Elektromotor (12) nachgeordneten Getriebes (20) aus einem Kühlmittelsumpf (32) in ein erhöht angeordnetes Kühlmittel-Reservoir (34) oder unmittelbar zu einer Axialbohrung (15) in der Rotorwelle (14) befördert
- Von der Axialbohrung (15) der Rotorwelle (14) strömt das Kühlmittel (30) in eine Verteiler-Kappe (44), die auf der Rotorwelle (14) unmittelbar axial benachbart zum Lamellenpaket (18) des Rotors (13) angeordnet ist
- Durch die Fliehkraft wird das Kühlmittel (30) durch radiale Öffnungen (46) in der Verteiler-Kappe (44) radial zum ersten Wickelkopf (71) geführt, und gleichzeitig von der Verteiler-Kappe (44) durch mindestens einen axialen Kühlmittelkanal (17) im Lamellenpaket (18) zum zweiten Wickelkopf (72) geführt
- Durch die Schwerkraft strömt das Kühlmittel (30) unter Wärmeaufnahme über die elektrische Wicklung (68) des Elektromotors (12) nach unten in den Kühlmittelsumpf (32)
- Insbesondere wird der Kühlmittelsumpf (32) durch einen Kühlkreis (80) einer zweiten Kühlflüssigkeit gekühlt, wobei vorzugsweise die zweite Kühlflüssigkeit auch ein Elektronikgehäuse (50) entwärmt, das an das Getriebegehäuse (21) angeflanscht ist.
